Europäisches Patentamt

**European Patent Office**

Office européen des brevets

(19)

(11) Publication number: **0 143 482**
**A1**

# (12) EUROPEAN PATENT APPLICATION

(21) Application number: **84201532.3**

(22) Date of filing: **24.10.84**

(51) Int. Cl.⁴: **C 08 J 5/18, C 08 L 29/04, C 08 L 77/00, B 32 B 27/08**

(30) Priority: **28.10.83 NL 8303713**

(43) Date of publication of application: **05.06.85 Bulletin 85/23**

(84) Designated Contracting States: **AT BE CH DE FR GB IT LI LU NL SE**

(71) Applicant: **STAMICARBON B.V., LICENSING SUBSIDIARY OF DSM Postbus 10, NL-6160 MC Geleen (NL)**

(72) Inventor: **Lemstra, Pieter Jan, Walcundusstraat 3, NL-6444 TX Brunssum (NL)**
Inventor: **Kirschbaum, Robert, Lynestraat 26, NL-6135 EC Sittard (NL)**
Inventor: **Burlet, Rudolf Johannes Hubertus, Nachtegaalstraat 122, NL-6165 BP Geleen (NL)**

(74) Representative: **Hoogstraten, Willem Cornelis Roeland et al, OCTROOIBUREAU DSM Postbus 9, NL-6160 MA Geleen (NL)**

(54) Process for producing single-layer or multi-layer film.

(57) A Nylon/ethylene vinyl alcohol copolymer (EVAL) blend for film extrusion as single layer film or in combination with other layers as laminates. The Nylon is the homopolymer of the lactam of ε-aminocaproic acid or a copolymer thereof with other polyamid-forming monomers. The Nylon has to contain less than 0,5% (wt) methanol soluble extract and preferably less than 0,05% (wt) methanol soluble lactam of ε-aminocaproic acid. Longer production time can be obtained without the forming of gel-like impurities. The films have good oxygen barrier qualities.

STAMICARBON B.V.

Inventors: Pieter J. LEMSTRA of Brunssum

Robert KIRSCHBAUM of Sittard

Rudolf J.H. BURLET of Geleen

PE 3508

0143482

1

## PROCESS FOR PRODUCING SINGLE-LAYER OR MULTI-LAYER FILM

The invention relates to a process for producing a single-layer or multi-layer film of which at least one layer has been obtained by extrusion and consists of a mixture obtained via a homogeneous melt, which mixture comprises the components:

a. the homopolymer of the lactam of $\varepsilon$-aminocaproic acid or a copolymer thereof with other polyamide-forming monomers and

b. a copolymer of ethylene and vinylacetate incorporating less than 50 % (wt) ethylene and having a degree of hydrolysis higher than 80 %,

where the ratio of

$$\frac{\text{weight component a}}{\text{weight component b}}$$ is higher than or equal to 1.

Films obtained from the above mixtures are known from European patent application 0.044.484. A disadvantage in producing these films by extrusion from these known mixtures is that after producing for some time the films will come to show irregularities, particularly in the form of gel-like impurities, ranging in colour from yellowish brown to brown. The result is that stops must be included in the production process for cleaning the extruder.

In DE-A-32.29.158, from which films obtained from the above mixtures are known as well, the gel formation in the film is attributed to the breakdown of the hydrolized copolymer of ethylene and vinyl acetate, hereinafter referred to as EVAL, under the influence of the rather high processing temperature of the mixture. It is therefore proposed to lower the processing temperature of the mixture to a level at which the degradatation of the EVAL is less strong. In order to achieve this a plasticiser is added to the polyamide, or a copolyamide having a lower melting temperature and consequently a lower processing temperature is started from.

It has been found that by taking the measures of DE-A-32 29 158 an improvement can be reached indeed, but that the occurrence of the yellowish brown to brown gel-like impurities referred to earlier cannot be avoided after producing for some time. Moreover, the addition of plasticizer may have an adverse effect on the favourable, i.e. low, gas permeability of the film.

The invention aims at providing a process for producing the above-mentioned films, in which process the time between two stops required for cleaning the extruder can be extended considerably so that practically acceptable uninterrupted production periods will be possible.

This has been achieved by proceeding in the composition of the mixture to be extruded from a polyamide or a copolyamide the methanol-soluble extract of which is less than 0.5 % (wt).

The current commercial grades of (co)polyamides, such as Nylon 6, Nylon 6,66 and Nylon 6,12, contain about 1 % (wt) methanol-soluble or water-soluble extract. This is evident, for instance, from the book 'Synthetische Fasern aus Polyamide' by Klare and others, Akademi-Verlag 1963 Berlin, page 92. From 25 own analyses of, for instance, commercial-grade Nylon 6 chips during the past six years the results given in table I below emerged.

Table I

| relative viscosity $\eta_{rel}$ measured in $H_2SO_4$ | methanol-soluble extract in % (wt) | water-soluble extract in % (wt) |
|---|---|---|
| 2.4 | 0.7-1.2 | 0.5-1.0 |
| 3.3 | 0.8-1.3 | 0.6-1.2 |

The process followed in these analyses to determine methanol-soluble extract is as follows. Ground Nylon 6 chips are subjected for four hours to an intermittent extraction at the boiling point of methanol, upon which the various components are determined by liquid chromatography up to an including the hexamer. The methanol-soluble extract is then defined as the sum total of the weight percentages of the components. Another method for measuring methanol-soluble extract is described in the book 'Kunststoff Handbuch', part VI, Polyamide, Carl Hanserverlag München 1966, page 570.

The commercial grades of polyamides with the above-mentioned amounts of methanol-soluble extract are suitable per se for extrusion to form films or tube, for the injection moulding of objects or for the spinning of filaments.

Surprisingly it has now been found that by reducing in these (co)polyamides the content of methanol-soluble extract to a value lower than 0.5 % (wt), these (co)polyamides, mixed with EVAL, show a substantial improvement in respect of the formation of impurities in the extruded film, as a result of which the idleness required by the film production process for cleaning the extruder will be reduced, so that the process can proceed more efficiently.

With Nylon 6 the extract mainly consists of the lactam of ε-aminocaproic acid. The rest of the extract consists of cyclic oligomers of caprolactam.

Possibly all components of the extract play a part in bringing about the impurities. There is a suspicion that in that process the lactam is of particular importance. Preference is therefore given to the use of a (co)polyamide of which the content of methanol-soluble lactam of ε-aminocaproic acid is lower than 0.05 % (wt).

Copolyamides suitable for the process include Nylon 6,12, Nylon 6,36, Nylon 6,66, Nylon 6,46 and Nylon 6,69, the first two of which are produced on the basis of lactams and the others on the basis of lactams and Nylon salts.

The following examples are given to show that for producing films from said polyamides or copolyamides in mixtures with more than 80 % hydrolized copolymers of ethylene and vinylacetate a substantial improvement of the production process can be achieved by proceeding from polyamides or copolyamides with a strongly reduced methanol-soluble extract.

The examples given are based on extrusion experiments performed with a co-extrusion installation. In order to be able to differentiate properly between the mixtures used, the residence time in the extruder is maximized by applying a minimum speed. This method makes it possible for the processing stability of the mixtures to be tested within a suitable experimenting time. Of course, this method is not applied in practice, but the differences observed remain and will only be extended on the time scale.

## Example A

A tumbler mixture consisting of 60 % (wt) Nylon-6 granulate, grade F 135 C, of AKZO/ENKA-NL with a melting point of 223 °C and 40 % (wt) of a saponified ethylene-vinylacetate copolymer (= EVAL) granulate with a degree of hydrolysis higher than 98 % and incorporating about 22 % (wt) ethylene and with a melting point of 187 °C from Kuraray (grade EVAL-ECF) is coextruded with low-density polyethylene (LDPE) of the Stamylan 1520 SX grade (DSM), using a modified polyethylene of the Admer L-1000 grade (Mitsui) as adhesion-promoting layer between the Nylon-6 and the EVAL.

This five-layer film built up from LDPE (20 μm); Admer (3 μm); EVAL (10 μm); Admer (3 μm); LDPE (20 μm) was extruded at an extrusion temperature of about 240 °C.

The above-mentioned melting points of the components have all been determined by means of a Perkin-Elmer differential calorimeter type DSC-2 at a heating rate of 10 °C/minute, the peak temperature of the melting curve being taken as the melting point. Table II shows, under A, the analytical results in respect of the content of caprolactam and oligomers present in the Nylon-6 granulate before commencement of the experiment. The figures in the table represent weight percentages. The method applied for this analysis is described above.

It has now been found by experiment that from the start of the experiment after a production period of about 40 minutes yellowish brown gels are formed in the films produced, upon which during further production imhomogeneities arise causing holes in the film.

## Comparative example A1

The experiment mentioned under A is repeated, but now first the Nylon-6 is extracted with demineralized water at 80 °C for 24 hours. After drying coextrusion takes place again with EVAL.

Table II shoes, under A-1, the analytical results in respect of the presence of caprolactam and oligomers.

It is now found that film can be produced without problems until about 110 minutes after commencement, upon which a very low degree of gel formation occurs.

Example B

A tumbler mixture consisting of 60 % (wt) granulate of a copolymer of caprolactam and a Nylon 4,6 salt (i.e. a copolymer of the grade 6,46 incorporating about 12 % (wt) Nylon 4,6 and 40 % (wt) of a saponified ethylene-vinylacetate copolymer (= EVAL) granulate having the specific characteristics as mentioned under example A is coextruded with low-density polyethylene of the Stamylan 1520 SX grade (DSM), using again Admer L-1000 as adhesion-promoting layer.

A five-layer film is extruded at an extrusion temperature of about 215 °C. This low processing temperature is possible, because the melting point of the copolymer is 205 °C.

Table II shows, under B, the analytical results in respect of the extractable monomeric and oligomeric components.

It is now found that, under these processing conditions in respect of the extrusion temperature and the components used, film can be produced for about 200 minutes, upon which some gel formation is observed again in the film.


Comparative example B1

The experiment mentioned under B is repeated, but now the Nylon-6,46 copolymer is extracted with water at 80 °C for 24 hours. Table II shows, under B1, the analytical results after extraction. It is found that under the conditions mentioned under B film can be produced without problems until the end of the chosen experimenting period of 300 minutes.

Table II

| ref. | caprolactam | dimer | trimer | tetramer | pentamer | hexamer | methanol-solu-ble extract | production time (hours) |
|---|---|---|---|---|---|---|---|---|
| A | 0.29 | 0.02 | 0.09 | 0.14 | 0.15 | 0.09 | 0.78 | 40 |
| A-1 | 0.01 | 0.01 | 0.05 | 0.10 | 0.13 | 0.09 | 0.39 | 110 |
| B | 0.20 | 0.03 | 0.08 | 0.13 | 0.18 | 0.13 | 0.75 | 180 |
| B-1 | 0.01 | 0.01 | 0.03 | 0.07 | 0.13 | 0.12 | 0.37 | 300 |

CLAIMS

1. Process for producing a single-layer or multi-layer film of which at least one layer has been obtained by extrusion and consists of a mixture obtained via a homogeneous melt, which mixture comprises the components:

   a. homopolymer of the lactam of ε-aminocaproic acid or a copolymer thereof with other polyamide-forming monomers and

   b. a copolymer of ethylene and vinylacetate incorporating less than 50 % (wt) ethylene and having a degree of hydrolysis higher than 80 %,

   where the ratio of

   $$\frac{\text{weight component a}}{\text{weight component b}} \text{ is higher than or equal to 1,}$$

   characterized in that the composition of the mixture to be extruded a polyamide or a copolyamide containing less than 0.5 % (wt) methanol-soluble extract is started from.

2. Process according to claim 1, characterized in that in the composition of the mixture to be extruded a polyamide or a copolyamide containing less than 0.05 % (wt) methanol-soluble lactam of ε-aminocaproic acid is started from.

0143482

**European Patent Office**

**EUROPEAN SEARCH REPORT**

Application number

EP 84 20 1532

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 064 330 (AMERICAN CAN CO). | | C 08 J 5/18 |
| | --- | | C 08 L 29/04 |
| D,A | EP-A-0 044 484 (BAYER AG) | | C 08 L 77/00 |
| | --- | | B 32 B 27/08 |
| D,A | DE-A-3 229 158 (AMERICAN CAN CO) | | |
| | ----- | | |

TECHNICAL FIELDS SEARCHED (Int. Cl.4)

C 08 J
C 08 L

The present search report has been drawn up for all claims

| Place of search | Date of completion of the search | Examiner |
|---|---|---|
| THE HAGUE | 05-02-1985 | VAN GOETHEM G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82